**Europäisches Patentamt**

**European Patent Office**

**Office européen des brevets**

(11) Numéro de publication : **0 395 508 B1**

(12)

# FASCICULE DE BREVET EUROPEEN

(45) Date de publication du fascicule du brevet :
**19.07.95 Bulletin 95/29**

(51) Int. Cl.$^6$ : **G01S 17/36,** G01S 17/42,
G01S 7/48

(21) Numéro de dépôt : **90401125.1**

(22) Date de dépôt : **25.04.90**

(54) **Procédé de télémétrie par mesure de temps de vol et dispositif pour la mise en oeuvre du procédé.**

(30) Priorité : **28.04.89 FR 8905654**

(43) Date de publication de la demande :
**31.10.90 Bulletin 90/44**

(45) Mention de la délivrance du brevet :
**19.07.95 Bulletin 95/29**

(84) Etats contractants désignés :
**BE CH DE GB LI**

(56) Documents cités :
**EP-A- 0 010 064**
**DE-A- 3 044 831**
**FR-A- 2 367 292**
**IEEE TRANSACTIONS ON PATTERN ANALY-
SIS AND MACHINE INTELLIGENCE, vol.
PAMI-5,no. 5, septembre 1983, pages 505-512,
IEEE, New York, US; R.A. JARVIS: "A laser
time-of-flight range scanner for robotic
vision"**

(56) Documents cités :
**MEASUREMENT TECHNIQUES, vol. 27, no. 2,
février 1984, pages 127-129, Plenum Publishing Corp., New York, US; A.D. NIZHENSKII et
al.: "Phase-type laser range finder"**
**OPTICS AND LASER TECHNOLOGY, vol. 7, no.
4, août 1975, pages 169-174,Guildford, GB;
G.M.S. JOYNES et al.: "Movement measurement by modulated lasers using frequency
lock loops"**

(73) Titulaire : **COMMISSARIAT A L'ENERGIE
ATOMIQUE**
**31/33, rue de la Fédération**
**F-75015 Paris Cédex 15 (FR)**

(72) Inventeur : **Clergeot, Henri**
**4 Allée de Québec**
**F-91300 Massy (FR)**

(74) Mandataire : **Dubois-Chabert, Guy et al**
**c/o BREVATOME**
**25, rue de Ponthieu**
**F-75008 Paris (FR)**

# Description

La présente invention concerne un procédé de télémétrie par mesure de temps de vol. L'invention vise également un dispositif permettant la mise en oeuvre du procédé.

Dans les domaines de la robotique et de la production automatisée, les mécanismes automatiques mis en oeuvre ont besoin d'informations sur leur environnement : celles-ci leur sont fournies par des capteurs qui associent aux grandeurs physiques des grandeurs électriques qui sont alors traitées par des calculateurs. La mesure de distance constitue l'une de ces informations et revêt un caractère primordial. En effet, pour qu'un robot mobile dans l'espace puisse prendre des objets et les reconnaître, il est absolument nécessaire de disposer d'informations de position du robot, et des objets dans l'espace, et des mesures de distance, ou télémétries, doivent être effectuées. Ces mesures peuvent aboutir, dans certains cas, à la reconstitution d'images tridimensionnelles et doivent dans tous les cas être effectuées rapidement, avec une très grande précision et indépendemment de la nature du contraste ou de la couleur des objets concernés.

Il existe actuellement de nombreux types de procédés de télémétrie utilisant des technologies très variées, tels que les procédés optiques, inductifs, capacitifs, à ultrasons ou hyperfréquences.

Le principal avantage des procédés optiques par rapport aux autres procédés est lié aux courtes longueurs d'onde mises en jeu. En effet, pour pouvoir effectuer de façon simple et donc rapide, c'est-à-dire avec un traitement du signal limité, une analyse détaillée de la surface d'un objet, il est nécessaire de pouvoir concentrer le rayonnement. Or, la dimension de la tâche focale d'une onde étant directement proportionnelle à sa longueur d'onde, il est nécessaire de choisir des vibrations de courtes longueurs d'onde. Les ondes optiques et plus particulièrement les ondes monochromatiques, sont très bien adaptées pour les résolutions inférieures au millimètre.

On connaît bien actuellement des procédés et dispositifs de télémétrie laser à source cohérente, mais leur portée est généralement supérieure au mètre et peut s'étendre jusqu'à la distance Terre-Lune. Cependant, les progrès technologiques récents dans le domaine de la modulation des faisceaux lasers permettent maintenant l'application de procédés de télémétrie laser aux distances proximétriques, à savoir comprises entre quelques millimètres et quelques mètres.

La modulation des faisceaux lasers peut être continue ou impulsionnelle et est réalisée, soit par un dispositif extérieur à l'émetteur laser (procédé acousto-optique ou électro-optique), soit par modulation interne ou directe dans le cas de l'utilisation de diodes lasers comme émetteurs.

Dans tous les cas, les fréquences de modulation peuvent être voisines du gigahertz.

Par ailleurs, les diodes lasers sont particulièrement adaptées à l'intégration dans des têtes de mesure de détecteurs de proximité du fait de leur encombrement minime, de leur robustesse et de leur alimentation à faible puissance.

Il existe actuellement plusieurs familles de procédés optiques pour la télémétrie de proximité, mettant en oeuvre des principes de mesure différent :
- les mesures par contraste,
- les mesures d'intensité lumineuse,
- les procédés de triangulation,
- les mesures interférométriques,
- les mesures par détection cohérente, et
- les mesures de temps de vol.

Les mesures par contraste utilisent principalement une caméra et une source lumineuse pour éclairer une cible ; elles nécessitent une numérisation d'images vidéo et un traitement numérique du contraste, qui sont des opérations lourdes et délicates lorsque la cible est complexe. Les procédés de mesure d'intensité lumineuse mettent en oeuvre un émetteur de lumière et un récepteur qui mesure l'intensité rétrodiffusée ou réfléchie par la cible. Leur inconvénient majeur est que la mesure de distance effectuée est entièrement dépendante de l'albédo de la cible, à savoir, de la fraction diffusée ou réfléchie par la cible de l'énergie de rayonnement incidente.

Les procédés de triangulation ont actuellement pour inconvénients de présenter un champ de vision très limité, des zones d'ombre inévitables et un encombrement important.

Les procédés interférométriques nécessitent par principe des réflexions multiples, ce qui n'est guère compatible avec l'albédo peu directif des cibles rencontrées usuellement en robotique ou en production automatisée.

Les télémètres à détection cohérente, très fortement inspirés des principes et des techniques employés dans les radars micro-ondes, nécessitent des lasers très stables en fréquence, ce qui exclut l'emploi des diodes lasers et conduit alors à un encombrement important, non souhaitable dans les applications en robotique.

Les procédés de télémétrie par mesure de temps de vol adaptés à la détection de proximité mettent en oeuvre une modulation sinusoïdale du faisceau émis par une diode laser. La mesure de distance s'effectue en mesurant le déphasage entre le signal émis et le signal rétrodiffusé par la cible. La plage de mesure est limitée à un déphasage de $2\pi$. Cependant, en utilisant plusieurs fréquences de modulation, il est possible de lever l'indétermination sur la mesure.

On connaît déjà, par le brevet allemand DE 3044831 un dispositif de mesure automatique, sans contact de positions spatiales, d'un objet, comprenant un dispositif d'émission de lumière modulée, un détecteur de lumière pour la réception d'une partie de la lumière modulée réfléchie par l'objet, un dispositif déflecteur de lumière pour la déflexion automatique du faisceau émis, et une unité de mesure et d'exploitation. Dans ce dispositif, le faisceau émis et la faisceau de mesure sont sensiblement coaxiaux et sont déviés ensemble par le dispositif déflecteur de lumière. En outre, la distance des points de l'objet par rapport au dispositif de mesure est déterminée en fonction de l'angle de déflexion du faisceau émis et l'image tridimensionnelle de l'objet ainsi que sa position spatiale sont déterminées.

Un générateur haute fréquence attaque un dispositif de modulation qui génère, d'une part, un signal de modulation vers un émetteur de lumière, et, d'autre part, un signal de référence. Le détecteur de lumière émet un signal de mesure correspondant au faisceau réfléchi ou rétrodiffusé par l'objet. Le signal de mesure et le signal de référence sont prétraités par deux systèmes de prétraitement, de préférence identiques, qui assurent une amplification à étages multiples et, éventuellement, une conversion des deux signaux à une fréquence inférieure.

Les signaux prétraités obtenus sont ensuite appliqués à un phasemètre pour déterminer le déphasage du signal de mesure par rapport au signal de référence, et au moyen d'un calculateur relié au phasemètre, en déduire le temps de vol et donc la distance correspondante entre l'objet et le déflecteur de lumière.

Un dispositif de balayage autonome assure la rotation d'un miroir de déflexion des faisceaux incidents et rétrodiffusés et fournit au calculateur un signal de balayage. La résolution augmentant avec la fréquence de modulation, des fréquences de plusieurs centaines de Mégahertz sont utilisées. Comme des mesures de déphasage ne peuvent être envisagées à ces fréquences avec les techniques connues, une conversion de fréquence des signaux de référence et de mesure doit nécessairement être effectuée pour mesurer le déphasage entre deux signaux à une fréquence de mesure compatible avec les techniques connues de mesure précise de déphasage, par exemple, inférieure au Mégahertz.

On connaît également, par le document FR-A-2 367 292, un dispositif de télémétrie par mesure de temps de vol dans lequel la mesure de déphasage du signal de mesure par rapport au signal de référence est réalisée à basse fréquence après changement de fréquence des signaux de référence et de détection. Ce document divulgue aussi l'asservissement de la fréquence de modulation du faisceau lumineux émis par le dispositif à une fréquence prédéterminée.

Or, pour que la mesure de déphasage corresponde le plus précisément possible au temps de vol effectif, il faut absolument qu'il y ait un contrôle permanent à la fois de la fréquence de modulation et de la fréquence de mesure. Toute dérive de l'une de ces deux fréquences conduit inévitablement à une erreur sur la mesure de déphasage et donc sur la détermination du temps de vol et de la distance recherchée.

Le but de l'invention est de remédier à ces inconvénients en proposant un procédé de télémétrie par mesure de temps de vol pour déterminer la position d'un objet dans un référentiel de mesure prédéterminé, comprenant la séquence d'étapes suivante :

a) émission d'un faisceau lumineux initial modulé selon un signal de modulation avec une fréquence de modulation (f) associée, et de génération d'un signal de référence correspondant audit faisceau,

b) déflexion dudit faisceau en un point prédéterminé lié audit référentiel, suivant un angle de déflexion prédéterminé, en un faisceau incident sur une partie sensiblement ponctuelle de la surface dudit objet,

c) déflexion du faisceau réfléchi et/ou rétrodiffusé par ledit objet et correspondant audit faisceau incident, suivant ledit angle de déflexion prédéterminé, en un faisceau de mesure,

d) détection dudit faisceau de mesure et de génération d'un signal de détection à ladite fréquence de modulation (f), et d'un signal de mesure à une fréquence de mesure (F), ledit signal de mesure étant obtenu par changement de fréquence du signal de détection, de ladite fréquence de modulation (f) à la fréquence de mesure (F),

e) traitement et mise en forme desdits signaux de référence et de mesure conduisant à des signaux prétraités de référence et de mesure, la fréquence de modulation étant asservie à une première fréquence d'asservissement prédéterminée, caractérisé en ce que ladite étape d'émission a) comprend une étape de synthèse a1) d'un signal intermédiaire de fréquence égale à la somme desdites fréquences de modulation et de mesure à partir de premier et second signaux de fréquences respectivement égales auxdites fréquences de modulation et de mesure, et en ce que ledit signal intermédiaire est mélangé, d'une part, audit signal de modulation pendant ladite étape d'émission a), pour obtenir ledit signal de référence, et d'autre part, audit signal de détection pendant ladite étape de détection d) pour obtenir ledit signal de mesure, et en ce que ladite étape de traitement et de mise en forme e) comprend une étape e1) d'asservissement de ladite fréquence de mesure (F), à une seconde fréquence d'asservissement prédéterminée.

Ainsi, grâce à l'asservissement des fréquences de modulation et de mesure, le changement de fréquence effectué sur les signaux de modulation et de détection garantit une conservation du déphasage et permet alors de mesurer celui-ci dans des conditions plus favorables de précision.

Le procédé selon l'invention permet ainsi d'optimiser le choix des différentes fréquences, en permettant par exemple, à la fois l'utilisation d'une fréquences très élevée de modulation garantissant une résolution élevée et d'une fréquence de mesure de déphasage beaucoup moins élevée, par exemple mille fois moins élevée, garantissant une haute précision. L'utilisation conjointe de fréquence de modulation et de mesure pouvant différer de plusieurs ordres de grandeur est rendu possible par un asservissement de celles-ci.

Grâce à cette étape de synthèse, on dispose d'une concrétisation des fonctions de changement de fréquence effectuées sur les signaux de modulation et de détection. Par ailleurs, du fait de l'asservissement des fréquences respectives des deux signaux contribuant à la synthèse du signal intermédiaire, on dispose, ainsi, à l'issue des étapes d'émission et de détection, de signaux de référence et de mesure dont les fréquences sont égales à la fréquence de mesure. La mesure de déphasage entre ces deux signaux peut alors être effectuée avec un haut niveau de précision.

L'invention a aussi pour objet un dispositif de télémétrie par mesure de temps de vol pour déterminer la position d'un objet dans un référentiel de mesure prédéterminé et mettant en oeuvre le procédé selon la revendication 1, comprenant :

- des moyens pour générer un signal de modulation à une fréquence de modulation (f),
- des moyens pour émettre un faisceau lumineux initial modulé, en réponse audit signal de modulation,
- des moyens pour dévier d'une part ledit faisceau initial, suivant un angle de déviation prédéterminé, en un faisceau incident sur une partie sensiblement ponctuelle de la surface dudit objet et d'autre part un faisceau réfléchi et/ou rétrodiffusé, par ladite partie sensiblement ponctuelle et correspondant audit faisceau incident, suivant ledit angle de déviation en un faisceau de mesure,
- des moyens de génération d'un signal de référence correspondant audit faisceau,
- des moyens de détection dudit faisceau de mesure et de génération d'un signal de détection à ladite fréquence de modulation,
- des moyens de génération d'un signal de mesure à une fréquence de mesure (F) par changement de fréquence du signal de détection, de ladite fréquence de modulation (f) à la fréquence de mesure (F),
- des moyens de traitement et de mise en forme desdits signaux de référence et de mesure conduisant à des signaux prétraités de référence et de mesure, des moyens d'asservissement étant prévus pour asservir la fréquence de modulation (f) à une première fréquence d'asservissement prédéterminée,

caractérisé en ce qu'il comprend :

- des moyens de synthèse d'un signal intermédiaire de fréquence (F+f) égale à la somme desdites fréquences de modulation (f) et de mesure (F) à partir de premier et second signaux de fréquences respectivement égales auxdites fréquences de modulation et de mesure,
- des moyens de mélange dudit signal intermédiaire audit signal de modulation pour obtenir ledit signal de référence,
- des moyens de mélange dudit signal intermédiaire audit signal de détection pour obtenir ledit signal de mesure,
- des moyens d'asservissement de ladite fréquence de mesure (F) à une seconde fréquence d'asservissement prédéterminée.

Ainsi, ces moyens d'asservissement permettent d'assurer un contrôle effectif des fréquences de modulation et de mesure et d'obtenir une précision élevée. Les moyens d'interface et de séquencement fournissent les consignes d'asservissement et permettent un transfert de données et de commandes entre les moyens de contrôle et de traitement, de préférence un calculateur, et les différents moyens mis en oeuvre dans le dispositif.

Suivant une version préférée de l'invention, les moyens de génération du signal de modulation et les moyens de génération desdits signaux de référence et de mesure sont couplés entre eux et constituent des moyens de traitement haute fréquence, et les moyens de traitement et de mise en forme délivrent auxdits moyens de traitement haute fréquence un premier signal de commande à une première fréquence de commande, sous-multiple prédéterminée de ladite fréquence de modulation, et un second signal de commande à une seconde fréquence de commande, sous multiple prédéterminée de ladite fréquence de modulation.

Le point commun des moyens de génération du signal de modulation et des moyens de génération des signaux de référence et de mesure est de traiter des signaux à haute fréquence. Les regrouper permet de limiter les problèmes de perturbation et de maîtriser les phénomènes de couplage parasite.

D'autres particularités et avantages de l'invention apparaîtront encore dans la description ci-après. Aux dessins annexés, donnés à titre d'exemples non limitatifs :

- la figure 1 est une vue synoptique du dispositif de télémétrie selon l'invention,
- la figure 2 est une vue schématique de la tête de mesure ;
- la figure 3 est une vue schématique de l'unité de mise en forme et d'asservissement du dispositif conforme à l'invention,
- la figure 4 est une vue schématique de l'unité de mesure de phase du dispositif conforme à l'invention,
- la figure 5 est une vue schématique de l'unité d'interface et de séquencement du dispositif conforme à l'invention,
- la figure 6 est un chronogramme représentatif de la méthode d'interpolation-dilatation mise en oeuvre dans le procédé conforme à l'invention.

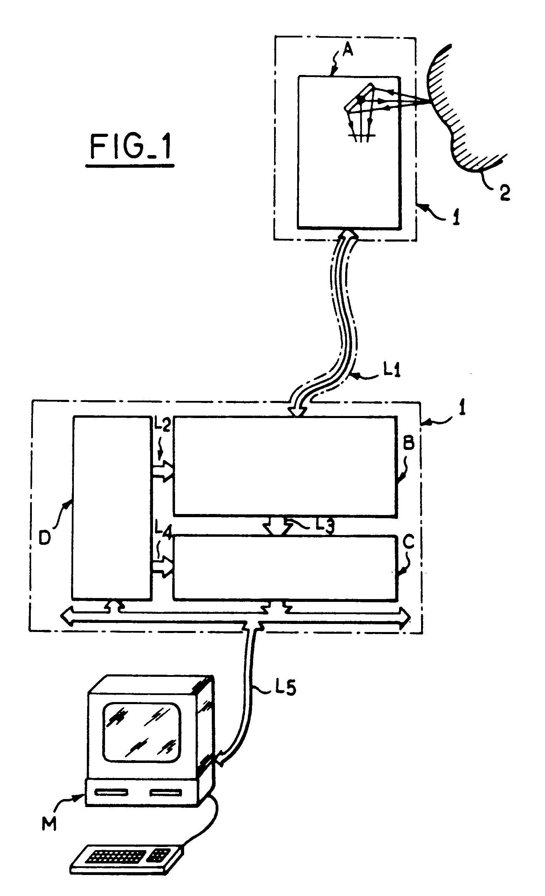

Le dispositif de télémétrie conforme à l'invention comprend, en référence à la figure 1 :
- une tête de mesure A placée à proximité d'un objet à identifier 2,
- une unité de mise en forme et d'asservissement B, reliée à la tête de mesure A par un câble multifilaire L1,
- une unité de mesure de phase C, reliée à l'unité de mise en forme et d'asservissement B par un connecteur L3,
- une unité d'interface et de séquencement D, reliée d'une part à l'unité de mise en forme et d'asservissement B par un connecteur L2, et d'autre part, à l'unité de mesure de phase C pour un connecteur L4.

Les unités de mesure de phase C et d'interface et de séquencement D sont reliés à un micro-ordinateur M ou tout autre dispositif de contrôle et de traitement par une liaison L5.

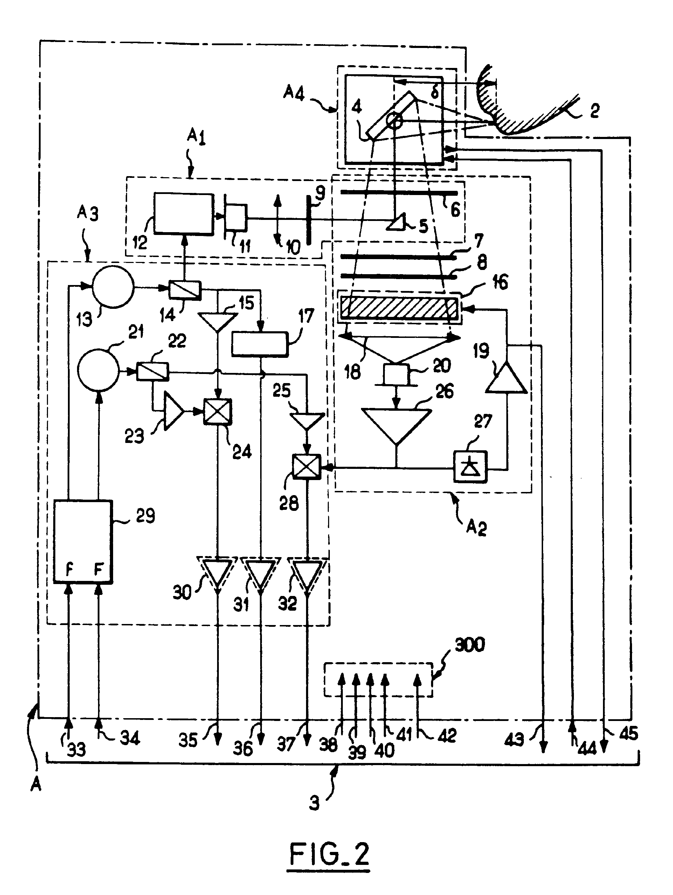

La tête de mesure A comprend, en référence à la figure 2 :
- une unité d'émission lumineuse A1,
- une unité de détection lumineuse A2,
- une unité de commande et de traitement de signaux A3, reliée d'une part à l'unité d'émission A1 et d'autre part, à l'unité de détection A2,
- une unité de déflexion lumineuse A4, recevant un faisceau issu de l'unité d'émission A1, le déviant et l'envoyant vers l'objet 2, et transmettant en retour à l'unité de détection A2 un faisceau réfléchi issu dudit objet.

L'unité lumineuse A1 comprend :
- une diode laser monomode 11, excitée par des moyens d'excitation et de stabilisation de puissance 12,
- un objectif 10, par exemple un objectif de microscope, présentant une courte focale pour délivrer un faisceau étroit et peu d'aberrations, et
- un polariseur 9, un prisme 5 et une lame quart d'onde 6 qui, associée au polariseur 9, joue le rôle de polariseur circulaire et atténue l'effet de réflexions multiples sur des cibles très réfléchissantes.

Un faisceau lumineux émis par la diode laser 11 traverse successivement l'objectif 10 et le polariseur 9, puis est dévié d'un angle de 90° par le prisme 5, traverse la lame quart d'onde 6 et est enfin dévié par un miroir déflecteur 4 actionné mécaniquement pour être appliqué à la surface de l'objet 2.

Le faisceau réfléchi, sensiblement coaxial avec le faisceau incident, traverse la lame quart d'onde 6 de l'unité d'émission A1 puis pénètre dans l'unité de détection A2. Il y traverse successivement un polariseur 7, un filtre interférentiel 8 permettant de réduire la lumière parasite, un modulateur lumineux 16, dont la fonction est d'atténuer la dynamique des signaux électroniques, et une lentille 18 asphérique à courte focale et grande ouverture, pour être enfin appliqué sur un détecteur 20 constitué d'une photodiode à avalanche qui émet un signal électrique de détection appliqué en entrée d'un préamplificateur haute fréquence 26.

La sortie de ce préamplificateur est reliée, d'une part, à l'unité de commande et de traitement A3 et, d'autre part, au sein de l'unité de détection A2, à des moyens de redressement 27. La sortie de ces moyens de redressement, qui est une image de l'amplitude réelle du signal de détection, est appliquée en entrée d'un circuit 19 de contrôle automatique de gain qui commande le modulateur lumineux 16.

L'unité de commande et de traitement A3 comprend :
- une unité de commande de fréquence 29, dont les entrées sont reliées à deux bornes 33, 34 d'un connecteur 3 permettant la connexion du câble L1 à la tête de mesure A, une première entrée correspondant à une fréquence f de modulation et la seconde entrée correspondant à une seconde fréquence F de mesure,
- deux oscillateurs commandés en tension (VCO) 13, 21 émettant respectivement un premier signal à la première fréquence de modulation f et un second signal à une fréquence égale à la somme f + F de la fréquence de modulation et de la fréquence de mesure.

Le signal issu du premier oscillateur 13 est appliqué, via un séparateur 14, d'une part, en entrée du modulateur d'émission 12, et d'autre part, à un diviseur de fréquence 17 et à un mélangeur de référence 24 via un amplificateur suiveur 15.

Le signal issu du second oscillateur 21 est appliqué via un séparateur 22, d'une part, au mélangeur de référence 24 via un amplificateur suiveur 23, et, d'autre part, à un mélangeur de mesure 28 via un amplificateur suiveur 25. Le mélangeur de mesure 28 présente une seconde entrée reliée à la sortie du préamplificateur 26 de l'unité de détection A2.

Les sorties respectives du mélangeur de référence 24, du diviseur de fréquence 17 et du mélangeur de mesure 28 sont appliquées à des amplificateurs tampons de sortie 30, 31, 32.

Le connecteur 3 de la tête de mesure A comprend :
- deux bornes d'entrée de fréquence 33, 34, reliées aux deux entrées de l'unité de commande de fréquence 29,
- trois bornes de sortie 35, 36, 37 reliées respectivement aux sorties des trois amplificateurs tampons 30, 31, 32,

- cinq bornes d'alimentation 38 à 42, reliées aux moyens d'alimentation 300 de la tête de mesure A, pour fournir respectivement des tensions continues de -5V, +5V, -12V, +12V et une haute tension, par exemple 200V, destinée à l'alimentation de la photodiode à avalanche 20,
- une borne de sortie de contrôle de modulateur 43 reliée à la sortie du circuit de contrôle automatique de gain 19,
- une borne d'entrée de commande de déviation 44 reliée au dispositif mécanique de l'unité de déflexion A4, et
- une borne de sortie de contrôle de déviation 45 reliée elle aussi au dispositif mécanique de l'unité de déflexion A4.

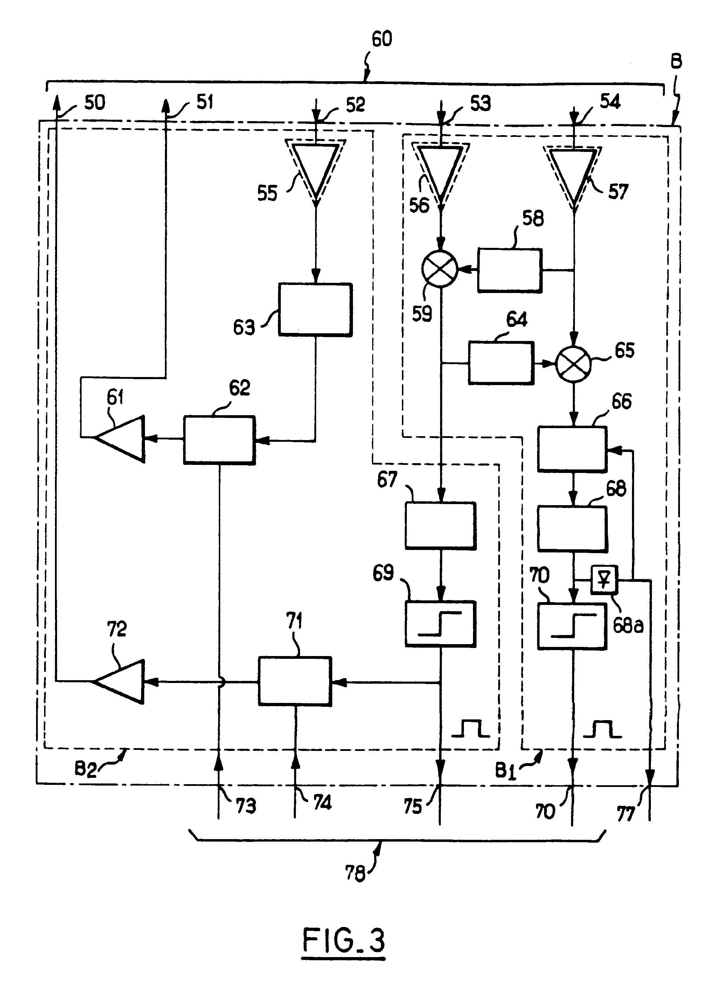

L'unité de mise en forme et d'asservissements B comprend, en référence à la figure 3 :

- une unité de mise en forme du signal de mesure B1 recevant en entrées le signal de mesure et le signal de référence issus de l'unité de commande et de traitement A3 via, successivement, le connecteur 3, la liaison L1 comportant de préférence un câble bifilaire blindé, et un connecteur 60 lié à l'unité de mise en forme et d'asservissement B,
- une unité de mise en forme du signal de référence et d'asservissement B2, reliée à l'unité de commande et de traitement A3 via le connecteur 60, la liaison L1, et le connecteur 3 et à l'unité de mise en forme du signal de mesure B1 au sein de l'unité B.

L'unité de mise en forme du signal de mesure B1 comporte en entrée deux amplificateurs à entrée différentielle 56, 57 présentant une bonne réjection de mode commun. Ils reçoivent respectivement en entrée, le signal de référence via la borne 53 d'entrée et le signal de mesure via la borne d'entrée 54.

La sortie de l'amplificateur de mesure 57 est reliée, d'une part, à un premier circuit de correction 58 et, d'autre part, à une première entrée d'un premier sommateur de correction 65.

La sortie de l'amplificateur de référence 56 est reliée à une première entrée d'un second sommateur de correction 59 dont une seconde entrée est reliée à la sortie du premier circuit de correction 58. La sortie du second sommateur de correction 59 est reliée, d'une part, à l'entrée d'un second circuit de correction 64 et d'autre part, à l'unité de mise en forme du signal de référence et d'asservissement B2.

La sortie du premier sommateur de correction 65 est appliquée en entrée d'un circuit de contrôle automatique de gain 66 qui permet un fonctionnement correct du dispositif de mesure de phase, et dont la sortie est reliée à l'entrée d'un premier filtre sélectif 68.

Ce premier filtre sélectif 68 a pour fonction de ramener l'amplitude des harmoniques à un niveau négligeable et de diminuer le bruit et joue le rôle de filtre anti-repliement vis à vis de la mesure de phase.

Le signal de commande du circuit de commande automatique de gain 66 est obtenu par détection du signal de sortie du premier filtre sélectif 68 au moyen d'un circuit détecteur 68a.

La sortie du premier filtre sélectif est en outre appliquée en entrée d'un premier circuit de mise en forme logique 70 du signal de mesure traité.

L'unité de mise en forme du signal de référence et d'asservissement B2 comprend deux boucles à verrouillage de phase associées respectivement aux deux fréquences de modulation f et de mesure F.

La première boucle à verrouillage de phase comprend :

- un amplificateur d'entrée 55 auquel est appliqué le signal issu du diviseur de fréquence 17 de l'unité de commande et de traitement A3,
- un diviseur de fréquence 63 dont l'entrée est reliée à la sortie dudit amplificateur d'entrée 55,
- un premier circuit comparateur 62 dont une première entrée est reliée à la sortie dudit diviseur de fréquence 63 et dont une seconde entrée est reliée, à une borne d'entrée 73 d'un connecteur 78 reliant l'unité de mise en forme B à l'unité d'interface et de séquencement D,
- et un premier intégrateur 61, dont l'entrée est reliée à la sortie dudit premier circuit comparateur 62 et dont la sortie est reliée, via une borne de sortie 51 du connecteur 60 reliant l'unité de mise en forme B à la tête de mesure A via la liaison L1, à la première entrée du circuit de commande de fréquence 29 de l'unité de commande et de traitement A3.

La seconde boucle à verrouillage de phase comprend :

- un second filtre sélectif 67, dont l'entrée est reliée à la sortie du second sommateur de correction 59 de l'unité de mise en forme de mesure B1,
- un second circuit de mise en forme logique 69, dont l'entrée est reliée à la sortie dudit second filtre sélectif 67,
- un second circuit comparateur 71 dont une première entrée est reliée, d'une part, à la sortie dudit second circuit de mise en forme logique 69 et à une borne de sortie de référence 75 dudit connecteur 78, et dont la seconde entrée est reliée à une borne 74 dudit connecteur 78, et un second intégrateur 72, dont l'entrée est reliée à la sortie dudit second circuit comparateur 71 et dont la sortie est reliée, via une borne de sortie 60 du connecteur 60, à la seconde entrée du circuit de commande de fréquence 29 de l'unité de commande et de traitement A3.

Dans les deux boucles à verrouillage de phase qui viennent d'être décrite, les premier et second circuits comparateurs 62, 71 sont de type séquentiel, avec une plage de fonctionnement de ± 2π et un fonctionnement en discriminateur de fréquence si les signaux ne sont pas synchrones, ce qui assure le verrouillage automatique des deux boucles.

Lors de l'étape transitoire de verrouillage de la seconde boucle à verrouillage de phase, le filtre sélectif 67 est mis automatiquement hors circuit par un dispositif non représenté.

Par ailleurs, les deux intégrateurs 61, 72 ont pour fonction de garantir une erreur de phase nulle. Le signal de commande du circuit de contrôle automatique de gain 66 est présenté sur une borne de sortie 77 du connecteur 78 et peut être utilisé comme mesure de l'intensité lumineuse rétrodiffusée par la cible.

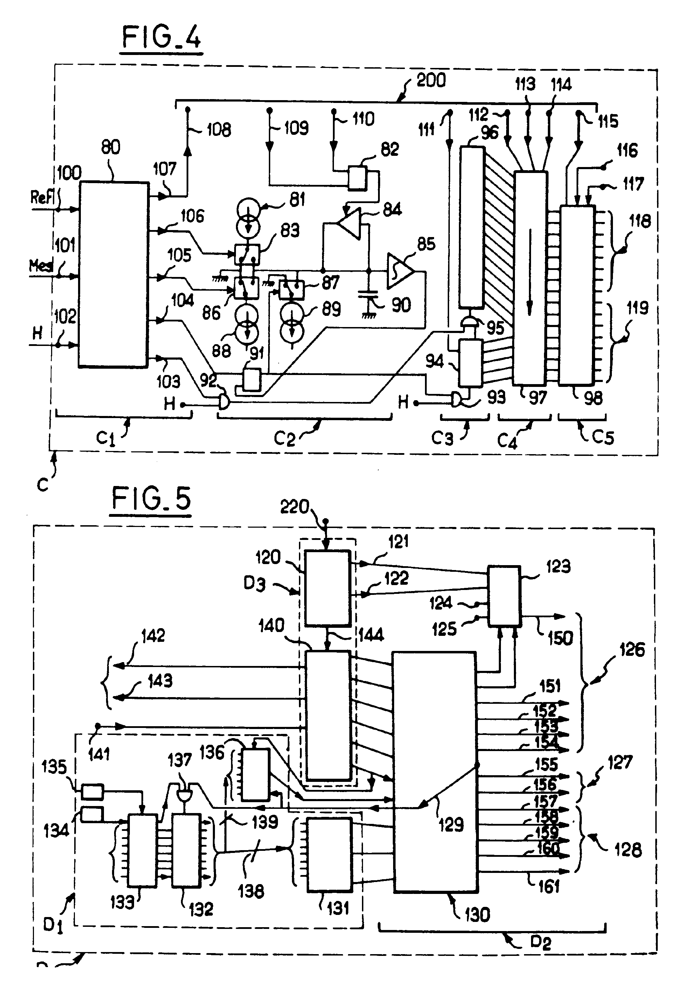

L'unité de mesure de phase C comprend, en référence à la figure 4,
- une unité d'élaboration C1 de durées de comptage, dont deux entrées 101, 102 sont reliées respectivement aux sorties de référence 75 et de mesure 70 de l'unité de mise en forme B (voir figure 3), et dont une troisième entrée 102 est reliée à un circuit d'horloge haute fréquence (typiquement, 20 MHz) non représenté,
- une unité de dilatation C2 reliée, en entrée, d'une part, aux sorties de l'unité d'élaboration C1, et d'autre part à l'unité d'interface et séquencement D,
- une unité de comptage C3 reliée, en entrée, d'une part, aux sorties de l'unité de dilatatiion C2 et, d'autre part, à l'unité d'interface et de séquencement D,
- une unité de décalage C4 dont les entrées de données sont directement reliées aux sorties de l'unité de comptage C3 et les entrées de contrôle sont reliées à l'unité d'interface et de séquencement D,
- et une unité de registre tampon C5, dont les entrées sont reliées directement aux sorties de l'unité de décalage C4.

Les différents éléments de l'unité de mesure de phase C seront décrits de façon détaillée lors de l'explication du fonctionnement du dispositif de télémétrie conforme à l'invention. L'unité d'interface et de séquencement D comprend, en référence à la figure 5,
- une unité de programmation D1 du nombre de mesures à moyenner,
- une unité de génération D2 des signaux de séquencement, et
- une unité d'horloge et de comptage D3.

Une horloge logique (non représentée), d'une fréquence de 20 MHz, est reliée en entrée 220 d'un compteur 120 prévu pour générer en retour des signaux ayant respectivement pour fréquence 2MHz, 4 MHz et 1 MHz sur des lignes de sortie 122, 121 et 144.

La ligne de sortie 144 est reliée en entrée d'un compteur d'adresse 140 qui génère, d'une part, des signaux d'adresse à destination d'une mémoire 130, de type PROM par exemple, et d'autre part deux signaux de fréquences respectives 500 kHz et 100 kHz sur des lignes de sortie 142 et 143 reliées respectivement aux lignes d'entrée 73 et 74 de l'unité de mise en forme et d'asservissement B (voir figure 3). La fonction de ces deux signaux est d'assurer les consignes d'asservissement en fréquence des deux boucles à verrouillage de phase de l'unité B.

Le compteur d'adresse 140 est par ailleurs synchronisé (ligne d'entrée 141) par un signal de fréquence 50 kHz issu du circuit d'élaboration 80 de l'unité ou mesure de phase C, via la ligne de sortie 107, en référence à la figure 5.

Le compteur d'adresse 140 génère des signaux d'adresse destinés aux six entrées d'adresse de poids, faible, d'une mémoire non volatile 130, de préférence de type PROM, qui contient le programme de séquencement du dispositif conforme à l'invention.

L'unité de programmation D1 du nombre de mesures à moyenner comprend un premier registre 133 sur les entrées duquel on présente une combinaison binaire représentative du nombre N de mesures par des moyens d'entrée non représentés, un second registre 132 dont les entrées sont directement reliées aux sorties du premier registre 133 et dont les sorties sont reliées, d'une part, aux entrées de chargement d'un compteur d'initialisation 136 via un bus 139, et, d'autre part, aux entrées d'un encodeur 131, via un bus 138.

Des commutateurs 134, 135 sont reliés respectivement à une entrée de chargement parallèle et à une ligne d'initialisation du premier registre 133.

L'initialisation du second registre 132 est effectuée via une porte logique ET à deux sorties, dont une entrée est reliée à une ligne de sortie du premier registre 133 et l'autre est reliée à une ligne de sortie de la mémoire non volatile 130 via une ligne 129.

Les lignes de sortie de la mémoire de séquencement 130 se décomposent en :
- un groupe de signaux d'interfaces programmables 128, destiné à une unité de contrôle et de traitement M, telle qu'un micro-ordinateur par exemple, en référence à la figure 1,
- un groupe de signaux d'asservissement 127, destinés à la transmission des commandes de début et de fin d'asservissement dans l'unité de mesure de phase C,
- un groupe de signaux de commande 126, destinés à la commande du registre à décalage 97 de l'unité de mesure de phase C.

Les signaux de fréquences 4 MHz et 2 MHz, émis par le compteur 120 respectivement sur les lignes 121 et 122, sont appliqués en entrée d'un multiplexeur 123, alimenté en tension continue via les lignes 124, 125, et commandé par deux lignes de sortie de la mémoire de séquencement 130.

On va maintenant expliquer le fonctionnement du dispositif selon l'invention.

En premier lieu, l'unité d'interface et de séquencement D génère, à partir d'une horloge à 20 MHz, deux signaux 142, 143 d'asservissement de fréquences respectives 500 kHz et 100 kHz. Ces signaux sont appliqués, via la liaison L2 (voir figure 1), aux entrées d'asservissement 73, 74 de l'unité de mise en forme et d'asservissement B. Les deux boucles à verrouillage de phase de cette unité B assurent alors l'asservissement des deux signaux de fréquences F et f égales respectivement à 100 kHz et 300 MHz destinés au circuit de commande de fréquence 29 de l'unité de commande 29 de l'unité de commande et de traitement A3 de la tête de lecture A. Le circuit de commande 29 pilote les deux oscillateurs contrôlés en tension 13 et 21 qui génèrent des signaux à des fréquences respectives égales à f (300MHz) et à f + F (300,1MHz). La diode laser émettrice 11 est alors excitée à la fréquence f et émet un faisceau laser qui, après avoir traversé successivement l'objectif 10 et le polariseur 9, est réfléchi par le prisme 5 puis par le miroir tournant 4, atteint la cible objet 2. Le faisceau réfléchi et/ou rétrodiffusé par la cible suit alors le trajet inverse, sensiblement coaxial au trajet incident, est refléchi par le miroir tournant 4 puis traverse successivement le polariseur 7, le filtre 8, le modulateur 16, et est focalisé par la lentille 38 sur la photodiode à avalanche 20 qui sert de détecteur. Le signal issu de la photodiode à avalanche 20 est préamplifié en 26 puis appliqué en entrée du mélangeur 28 dont une seconde entrée est reliée via un circuit suiveur 25 et un séparateur 22 à l'oscillateur 21 de fréquence f + F. Ce mélangeur 28 est agencé de sorte qu'il délivre en sortie un signal de mesure à la fréquence de 100 kHz.

Parallèlement, le mélangeur 28 délivre un signal de référence, lui aussi à la fréquence de 100kHz, obtenu à partir du signal appliqué à la commande de la diode émettrice (fréquence 300 MHz) et du signal issu de l'oscillateur 21 (fréquence 300,1 MHz).

Les deux signaux de mesure et de référence sont appliqués respectivement aux amplificateurs tampons 32, 30 et transmis par la liaison L1 (figure 1) à l'unité de mise en forme et d'asservissement B.

L'information de mesure de distance recherchée va être obtenue par traitement du retard du signal de mesure par rapport au signal de référence.

Ces deux signaux sont appliqués respectivement aux entrées 53, 54 des deux amplificateurs différentiels 55, 56 dont les sorties respectives sont soumises à un dispositif de correction de couplage (58, 59, 64, 65) réalisé selon des techniques connues de l'homme de métier. Les signaux de mesure et de référence sont ensuite soumis aux filtres sélectifs 68, 67 puis mis en forme par les circuits de mise en forme logique respectifs 70, 69 agencés pour délivrer des formes d'onde en créneaux.

Les signaux de mesure et de fréquence ainsi traités sont alors appliqués via la liaison L3 à l'unité de mesure de phase C. Cette unité est pilotée par l'unité d'interface et de séquencement D via la liaison L4 (figure 1). Elle reçoit en particulier de l'unité D le signal d'horloge à 20 MHz appliqué respectivement à l'entrée 102 du circuit d'élaboration 80, à une entrée d'une porte logique ET 92 et à une entrée d'une porte logique ET 93 de l'unité de comptage C3.

Le rôle du circuit d'élaboration 80 est d'élaborer à partir des signaux de mesure et de référence et du signal d'horloge, des signaux 103, 104, 105, 106 permettant la mise en oeuvre de la méthode classique d'interpolation-dilatation et un signal de séquencement 107 à la fréquence de 50 kHz destiné au compteur d'adresse 140 de l'unité d'interface et de séquencement D.

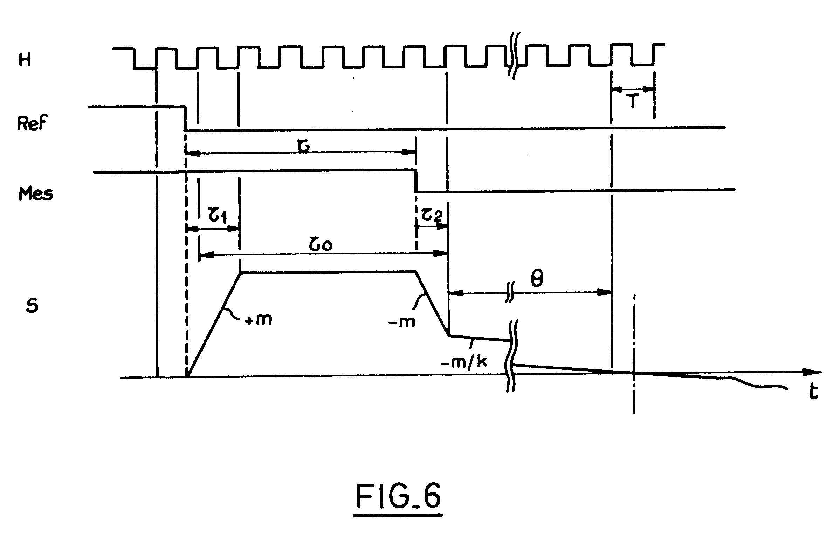

La figure 6 illustre le principe de la méthode d'interpolation-dilatation qui permet d'utiliser une horloge plus lente (20 MHz) que la fréquence effective de mesure (600 MHz) tout en conservant une très bonne précision dans la mesure du déphasage.

Les signaux de référence et de mesure sont représentés par deux fronts descendants décalés et il s'agit de déterminer le retard $\tau$ du front descendant du signal de mesure par rapport au front descendant du signal de référence.

Soit $\tau 1$ le laps de temps entre le front descendant du signal de référence R et le premier front montant du signal d'horloge H suivant immédiatement ledit front descendant de R, plus une période d'horloge H.

Soit $\tau_2$ le laps de temps entre le front descendant du signal de mesure M et le premier front montant du signal d'horloge H suivant immédiatement ledit front descendant de M.

Soit $\tau_0$, l'intervalle de temps entre lesdits premiers fronts montants d'horloge.

On peut écrire que

$$\tau = \tau_0 - \tau_2 + (\tau_1 - T) = (\tau_0 - T) + (\tau_1 - \tau_2) \quad (1)$$

avec T : période du signal d'horloge H.

Par construction, $\tau_0$ est un multiple de T et donc la quantité $\tau_0 - \tau$ peut être aisément obtenue par comptage.

Avec la méthode d'interpolation-dilatation, un signal de rampe S, tel que représenté à la figure 6, est généré. Il est constitué :

- d'une première rampe de pente prédéterminée +m, de durée égale à $\tau_1$, d'instant initial égal à l'instant du front descendant du signal de référence R,
- d'un niveau constant de valeur égale à la valeur finale de la première rampe et durant jusqu'à l'instant du front descendant du signal de mesure M,
- d'une seconde rampe de pente prédéterminée -m, de valeur initiale égale au niveau constant précédent et de durée égale à $\tau_2$,

- et d'une rampe dilatée de pente prédéterminée -m/K de valeur initiale égale à la valeur finale de ladite seconde rampe.

Soit $\Theta$, la durée de la rampe dilatée jusqu'à annulation. Il est aisé de montrer la relation suivante :

$$\tau_1 - \tau_2 = \frac{\theta}{K} \quad (2)$$

La durée $\Theta$ peut aussi être déterminée par comptage, à une période d'horloge près, ce qui assure une précision très correcte lorsque le coefficient de dilatation K est choisi suffisamment grand devant 1.

A titre d'exemple, la résolution sur $\tau$ est égale à $\Delta \tau = 50/32 \simeq 1,5\text{ns}$ lorsque la fréquence d'horloge est 20MHz (période 50ns) et le coefficient de dilatation est égal à 32. Si on considère une fréquence de modulation f de 300 MHz et une fréquence de mesure stabilisée F de 100 kHz, la relation existant entre le retard effectif à 300 MHz, $\tau_0$, et le retard $\tau$ à 100 kHz est :

$$\tau = f/F \cdot \tau_0 = 3\ 000\ \tau_0 \quad (3)$$

Donc, pour obtenir la résolution souhaitée $\tau_0 = 0,6$ ps, il faut garantir une résolution de 1,8 ns sur les signaux à la fréquence stabilisée de 100 kHz.

Un coefficient de dilatation de 32, qui fournit une résolution de 1,5 ns, donc inférieure à la résolution souhaitée, est ainsi tout à fait approprié.

La mise en oeuvre de la méthode qui vient d'être décrite est assurée par l'unité de dilatation C2, en référence à la figure 5. La sortie 106 du circuit d'élaboration 80, correspondant à la durée $\tau_1$ commande le commutateur 83 de sorte que la source de courant 81 délivre un courant constant I au condensateur d'intégration 90. La tension aux bornes de ce condensateur, initialement nulle, croît alors proportionnellement avec le temps avec un taux de croissante m =

I/ $\mathcal{C}$, si $\mathcal{C}$ est la capacité du condensateur 90. Au bout d'un laps de temps $\tau_1$, le commutateur 83 est commandé par le signal 106 de sorte qu'il n'y ait plus alimentation en courant du condensateur 90 et que la tension à ses bornes reste constante. Le signal 105, issu du circuit d'élaboration 80 et correspondant à la durée $\tau_2$, commande alors, en réponse au front descendant du signal de mesure M, le commutateur 86 de sorte que la source de courant 88 délivre un courant constant égal à -I au condensateur 90, pendant une durée égale à $\tau_2$. La tension aux bornes du condensateur 90 décroit alors avec une vitesse de décroissance égale à -m.

Le circuit d'élaboration 80 génère ensuite un signal 104 de début de dilatation appliqué via une bascule RS 91 à la commande du commutateur 87 pour assurer la délivrance d'un courant constant égal à -I/32 à destination du condensateur 90.

La tension aux bornes de celui-ci continue à décroître mais avec une vitesse de décroissance égale à - m/32. Le comparateur 85 détecte l'annulation de la tension aux bornes du condensateur 90 et émet alors un signal appliqué à l'entrée S de la bascule RS 91, provoquant l'interruption de la rampe dilatée.

Les trains d'impulsions correspondant à la durée $\Theta$ et à la durée $\tau_0$ sont appliqués respectivement aux compteurs 94 et 95 de l'unité de comptage C3, via des portes logiques ET 93 et 95.

Le circuit d'élaboration 80 émet tout d'abord un signal 103, représentatif de la durée $\tau_0$ qui, combiné au signal d'horloge à 20 MHz à travers la porte logique ET 92, conduit à un train d'impulsions de durée globale égale à $\tau_0$. Ce train d'impulsions est appliqué en entrée de comptage du compteur 96 qui délivre alors en sortie une représentation binaire du nombre d'impulsions générées pendant le laps de de temps $\tau_0$. Ce nombre codé est ensuite stocké dans le registre à décalage 97 puis transféré, après décalage éventuel, via le registre tampon 98 et la liaison L5, vers un calculateur M ou tout autre moyen de contrôle et de traitement.

Il s'agit ensuite d'effectuer le comptage d'impulsions correspondant à la durée $\Theta$, en référence à la figure 6. A cette fin, le circuit d'élaboration 80 génère le signal 104, comme décrit précédemment. Ce signal est appliqué en entrée R d'une bascule RS, dont la sortie combinée au signal d'horloge à 20 MHz par la porte logique ET 93, conduit à un train d'impulsions de durée globale $\tau$. Ce train d'impulsions est appliqué à l'entrée du compteur 94, qui possède une capacité de comptage de 32 (5 lignes de sortie). Ce compteur assure la division par 32 du nombre d'impulsions de la rampe dilatée, en émettant une impulsion de comptage en entrée du compteur 96 via la porte logique ET 95, toutes les 32 impulsions d'horloge de référence à 20MHz.

Le moyennage de plusieurs mesures successives est possible par simple accumulation dans les compteurs 94 et 96. Il est possible de moyenner jusqu'à $2^7$ (128) mesures.

Si la valeur maximale de $\tau$ est fixée, à titre d'exemple, à 200 périodes d'horloge de référence à 20 MHz, le compteur 96 doit comporter au moins 8 + 7 = 15 bits de sortie. Le nombre N de mesures moyennées est toujours pris de la forme $N = 2^P$, avec $0 \leq \tau \leq 7$, de sorte que la division par N se réduit à un décalage binaire de p pas, effectué par le registre à décalage 97. Le résultat moyenné est mémorisé dans le registre tampon 98 qui présente, à titre d'exemple de réalisation, une sortie de 2 x 8 bits. Des lignes de commande 116, 117 permettent d'assurer un multiplexage éventuel respectivement du groupe des 8 bits de poids faible 119 et du groupe des 8 bits de poids fort 118, rendant ainsi possible l'utilisation d'un bus de transfert de 8 bits, non représenté sur la figure 5.

Les commandes respectives :
- de remise à zéro 111 des compteurs 94, 96,
- de réinitialisation 112, d'effacement 113, et de décalage 114 du registre à décalage 97,
- de chargement 115, de sélection 116, 116 de bus de poids fort et de poids faible du registre tampon 98,

sont assurées par l'unité d'interface et de séquencement D via les lignes de sortie de la mémoire PROM de séquencement 130, respectivement 153, 151, 152, 150 et 154, et par le calculateur M via la liaison L5, en ce qui concerne les commandes de sélection de bus.

L'unité d'interface et de séquencement D assure en outre, via les lignes 155 et 156, les commandes de début et de fin d'asservissement appliquées aux entrées 109 (S) et 110 (R) de la bascule RS 82. Cette bascule permet la mise à zéro de la tension aux bornes du condensateur d'intégration 90 et ainsi la préparation de chaque mesure.

La mémoire de séquencement 130 de l'unité d'interface et de séquencement D est programmée de sorte qu'une période sur deux des signaux de mesure et de référence à 100 kHz sert à la mesure proprement dite tandis que la suivante est consacrée à la gestion du résultat de cette mesure. Le choix de l'état "mesure" ou "gestion" est effectué dans le circuit d'élaboration 80 et se traduit par une division par deux du signal de référence appliqué en entrée 100, qui fournit le signal de synchronisme 107, 108 à une fréquence de 50 kHz qui est appliqué en entrée 141 du compteur d'adresse 140 de l'unité D, afin de garantir le synchronisme du diviseur par deux du circuit d'élaboration 80 et du diviseur par deux que constitue le compteur d'adresse 140, en ce qui concerne le passage de la fréquence de 100 kHz à la fréquence de 50 kHz.

Lorsque les données numériques correspondant respectivement aux durées $\tau_0$ et $\Theta$ ont été transmises au calculateur M, après avoir été éventuellement moyennées, celui-ci en déduit la valeur du retard $\tau$, suivant les relations (1) et (2) établies précédemment.

La connaissance de $\tau$ et des fréquences de modulation f et de mesure F permet alors de déterminer la distance à mesurer $\delta$ ; sachant que la phase est conservée quelle que soit la fréquence, la distance à mesurer $\delta$ entre la cible et le milieu du miroir tournant 4 et le retard $\tau$ sont liés par la relation

$$\delta = \frac{F}{f} \cdot \frac{c.\tau}{2} \quad (4)$$

sachant que c est la vitesse de la lumière.

La description du fonctionnement qui vient d'être faite concerne une ou plusieurs mesures de distance pour une position angulaire donnée du miroir tournant 4 de l'unité de déflexion lumineuse A4. Une commande de déviation 45 du miroir 4 est bien sûr prévue, à partir du calculateur M par exemple. Cette commande peut en outre être asservie suivant des techniques d'asservissement bien connues. A cette fin, l'unité de déflexion lumineuse délivre un signal 45 représentatif de la déviation angulaire instantanée du miroir tournant.

Bien entendu, l'invention n'est pas limitée aux exemples décrits et représentés et de nombreux aménagements peuvent être apportés à ces exemples sans sortir du cadre de l'invention.

On peut ainsi envisager que les unités de mise en forme B, de mesure de phase C et de séquencement D sont réunies avec la tête de lecture A dans un boîtier unique, ou au contraire, qu'une partie ou la totalité desdites unités soit incluse dans le calculateur M.

## Revendications

1. Procédé de télémétrie par mesure de temps de vol pour déterminer la position d'un objet (2) dans un référentiel de mesure prédéterminé, comprenant la séquence d'étapes suivante :

a) émission d'un faisceau lumineux initial modulé selon un signal de modulation avec une fréquence de modulation (f) associée, et de génération d'un signal de référence correspondant audit faisceau,

b) déflexion dudit faisceau en un point prédéterminé lié audit référentiel, suivant un angle de déflexion prédéterminé, en un faisceau incident sur une partie sensiblement ponctuelle de la surface dudit objet,

c) déflexion du faisceau réfléchi et/ou rétrodiffusé par ledit objet et correspondant audit faisceau incident, suivant ledit angle de déflexion prédéterminé, en un faisceau de mesure,

d) détection dudit faisceau de mesure et de génération d'un signal de détection à ladite fréquence de modulation (f), et d'un signal de mesure à une fréquence de mesure (F), ledit signal de mesure étant obtenu par changement de fréquence du signal de détection, de ladite fréquence de modulation (f) à la fréquence de mesure (F),

e) traitement et mise en forme desdits signaux de référence et de mesure conduisant à des signaux prétraités de référence et de mesure, la fréquence de modulation étant asservie à une première fréquence d'asservissement prédéterminée,

caractérisé en ce que ladite étape d'émission a) comprend une étape de synthèse a1) d'un signal intermédiaire de fréquence égale à la somme desdites fréquences de modulation et de mesure à partir de premier et second signaux de fréquences respectivement égales auxdites fréquences de modulation et de mesure, et en ce que ledit signal intermédiaire est mélangé, d'une part, audit signal de modulation pendant ladite étape d'émission a), pour obtenir ledit signal de référence, et d'autre part, audit signal de détection pendant ladite étape de détection d) pour obtenir ledit signal de mesure, et en ce que ladite étape de traitement et de mise en forme e) comprend une étape e1) d'asservissement de ladite fréquence de mesure (F), à une seconde fréquence d'asservissement prédéterminée.

2. Procédé conforme à la revendication 1, caractérisé en ce que ladite étape e) de traitement et de mise en forme comprend en outre une étape e2) de correction de couplage entre ledit signal de référence et ledit signal de mesure.

3. Procédé conforme à l'une des revendications 1 ou 2, caractérisé en ce que ladite étape e) de traitement et de mise en forme comprend en outre une étape e3) de filtrage sélectif à ladite fréquence de mesure (F) et de mise en forme de créneaux dudit signal de référence et dudit signal de mesure, conduisant auxdits signaux prétraités de référence et de mesure.

4. Procédé conforme à la revendication 3, caractérisé en ce qu'il comprend en outre une étape f) de mesure de déphasage entre lesdits signaux prétraités de référence et de mesure et de détermination dudit temps de vol correspondant, et en ce que ladite étape f) de mesure de déphasage comporte une étape f1) d'élaboration d'un premier signal de rampe, d'un second signal de rampe, d'un signal de comptage et d'un signal de dilatation à partir desdits signaux prétraités de référence et de mesure et d'un signal d'horloge de fréquence prédéterminée ($F_0$), lesdits premier et second signaux de rampe, ledit signal de comptage et ledit signal de dilatation étant agencés pour la détermination dudit temps de vol par une méthode d'interpolation-dilatation à double rampe.

5. Procédé conforme à la revendication 4, caractérisé en ce que ladite étape f) de mesure de déphasage comprend en outre une étape $f_2$) d'élaboration d'un signal de séquencement à partir dudit signal prétraité de référence, ledit signal de séquencement présentant une fréquence moitié de la fréquence dudit signal prétraité de référence.

6. Procédé conforme aux revendications 1 à 5 caractérisé en ce qu'il comprend en outre une étape g) de détermination de la distance de ladite partie sensiblement ponctuelle par rapport à un point prédéterminé dans ledit référentiel de mesure en fonction dudit temps de vol et dudit angle de déflexion prédéterminé et en ce que ladite séquence des étapes a) à g) est effectuée un nombre prédéterminé de fois pour un angle de déflexion prédéterminé et en ce que lesdits temps de vol obtenus à l'issue de chacune desdites séquences sont moyennés pour fournir un temps de vol moyen et une détermination d'une distance moyenne entre ladite partie sensiblement ponctuelle de la surface dudit objet et ledit point prédéterminé dans ledit référentiel de mesure.

7. Procédé conforme aux revendications 5 et 6, caractérisé en ce que chacune desdites séquences est réalisée en synchronisme avec ledit signal de séquencement.

8. Dispositif de télémétrie par mesure de temps de vol pour déterminer la position d'un objet (2) dans un référentiel de mesure prédéterminé et mettant en oeuvre le procédé selon la revendication 1, comprenant :
   - des moyens pour générer un signal de modulation à une fréquence de modulation (f),
   - des moyens (A1) pour émettre un faisceau lumineux initial modulé, en réponse audit signal de modulation,
   - des moyens (A4) pour dévier d'une part ledit faisceau initial, suivant un angle de déviation prédéterminé, en un faisceau incident sur une partie sensiblement ponctuelle de la surface dudit objet (2) et d'autre part un faisceau réfléchi et/ou rétrodiffusé, par ladite partie sensiblement ponctuelle et correspondant audit faisceau incident, suivant ledit angle de déviation en un faisceau de mesure,
   - des moyens de génération d'un signal de référence correspondant audit faisceau,
   - des moyens (A2) de détection dudit faisceau de mesure et de génération d'un signal de détection à ladite fréquence de modulation,
   - des moyens de génération d'un signal de mesure à une fréquence de mesure (F) par changement de fréquence du signal de détection, de ladite fréquence de modulation (f) à la fréquence de mesure (F),
   - des moyens de traitement et de mise en forme desdits signaux de référence et de mesure conduisant à des signaux prétraités de référence et de mesure, des moyens d'asservissement étant prévus pour asservir la fréquence de modulation (f) à une première fréquence d'asservissement prédéterminée, caractérisé en ce qu'il comprend :
   - des moyens de synthèse d'un signal intermédiaire de fréquence (F+f) égale à la somme desdites fréquences de modulation (f) et de mesure (F) à partir de premier et second signaux de fréquences respectivement égales auxdites fréquences de modulation et de mesure,

- des moyens de mélange (24) dudit signal intermédiaire audit signal de modulation pour obtenir ledit signal de référence,
- des moyens de mélange (28) dudit signal intermédiaire audit signal de détection pour obtenir ledit signal de mesure,
- des moyens d'asservissement de ladite fréquence de mesure (F) à une seconde fréquence d'asservissement prédéterminée.

9. Dispositif conforme à la revendication 8, caractérisé en ce que lesdits moyens de génération dudit signal de modulation et lesdits moyens de génération desdits signaux électriques de référence et de mesure sont couplés entre eux et constituent des moyens (A3) de traitement haute fréquence, et en ce que lesdits moyens (B) de traitement et de mise en forme délivrent auxdits moyens (A3) de traitement haute fréquence un premier signal de commande à une première fréquence de commande, sous-multiple prédéterminée de ladite fréquence de modulation et un second signal de commande à une seconde fréquence de commande, sous multiple prédéterminée, de ladite fréquence de modulation.

10. Dispositif conforme à la revendication 9, caractérisé en ce que lesdits moyens (B) de traitement et de mise en forme comprennent des moyens (B2) pour asservir en fréquence lesdits premier et second signaux de commande respectivement par rapport à des première et seconde fréquences de consigne de premier et second signaux de consigne de fréquence délivrés par lesdits moyens (D) d'interface et de séquencement.

11. Dispositif conforme à l'une des revendications 8 à 10, caractérisé en ce que lesdits moyens (B) de traitement et de mise en forme comprennent en outre des moyens de correction de couplage (58, 59, 64, 65) entre un premier canal d'entrée véhiculant ledit signal électrique de référence et un second canal d'entrée véhiculant ledit signal électrique de mesure.

12. Dispositif conforme à la revendication 11, caractérisé en ce que lesdits moyens (B) de traitement et de mise en forme comprennent en outre, des premiers et seconds moyens de filtrage sélectif, centrés sur ladite fréquence de mesure, reliés respectivement aux premier et second canaux d'entrée en aval desdits moyens de corrections de couplage, et des premiers et seconds moyens de mise sous forme de créneaux reliés respectivement auxdits premiers et seconds moyens de filtrage sélectif et délivrant lesdits signaux prétraités de référence et de mesure.

13. Dispositif conforme à l'une des revendications 10 à 12, caractérisé en ce que lesdits moyens (C) de mesure de déphasage comprennent des moyens (80) pour élaborer à partir desdits signaux de référence et de mesure et d'un signal d'horloge de fréquence prédéterminée issu desdits moyens (D) d'interface et de séquencement, un premier signal de rampe, un second signal de rampe, un signal de comptage et un signal de dilatation, lesdits premier et second signaux de rampe, ledit signal de comptage et ledit signal de dilatation étant agencés pour mettre en oeuvre des moyens (C2) d'intégration pour la détermination dudit temps de vol par une méthode d'interplation-dilatation à double rampe.

14. Dispositif conforme à la revendication 13, caractérisé en ce que lesdits moyens (C2) d'intégration comprennent :
    - un condensateur d'intégration (90),
    - une première source de courant (81) d'intensité prédéterminée,
    - une seconde source de courant (88) d'intensité égale à celle de ladite première source,
    - une troisième source de courant (89) d'intensité égale à une fraction prédéterminée à celle desdites première et seconde sources,
    - des premiers, seconds et troisièmes moyens de commutation (83, 88, 89), commandés respectivement par lesdits premier signal de rampe, et second signal de rampe et ledit signal de dilatation, pour relier sélectivement respectivement lesdites première, seconde et troisième sources de courant audit condensateur d'intégration de sorte que ledit condensateur absorbe sélectivement, respectivement, un premier courant d'intensité prédéterminée, un second courant de même intensité et de signe opposé et un troisième courant d'intensité égale à une fraction prédéterminée de ladite intensité et de signe opposé audit premier courant, et
    - des moyens (85) pour détecter l'annulation de la tension aux bornes dudit condensateur d'intégration (90) et émettre un signal de fin de dilatation.

15. Dispositif conforme à l'une des revendications 13 ou 14, caractérisé en ce que lesdits moyens (C) de mesure de déphasage comprennent en outre :
    - des moyens de comptage (94, 96), reliés auxdits moyens d'élaboration (80) et auxdits moyens d'intégration (C2) pour compter, d'une part, le nombre de périodes dudit signal d'horloge correspondant à la durée dudit signal de comptage, et d'autre part, le nombre de périodes dudit signal d'horloge correspondant à la durée de la phase de dilatation pendant laquelle ledit condensateur d'intégration est alimenté par ladite troisième source de courant.

16. Dispositif conforme a la revendication 15, caractérisé en ce que lesdits moyens (C) de mesure de déphasage comprennent en outre : des moyens (97) pour décaler sélectivement des données numériques de comptage issues desdits moyens de comptage (94, 96) de sorte qu'une valeur moyenne de plusieurs mesures de temps de vol effectuées par ledit dispositif apparaît en sortie desdits moyens de décalage (97).

17. Dispositif conforme à l'une des revendications 10 à 16, caractérisé en ce que lesdits moyens (D) d'interface et de séquencement comprennent :
- des moyens d'horloge (120) pour générer un signal d'horloge de fréquence prédéterminée,
- des moyens de comptage d'adresse (140), reliés auxdits moyens d'horloge, pour générer, d'une part, une combinaison binaire d'adresse sur un nombre prédéterminé de lignes de sortie d'adresse, et, d'autre part, lesdits premier et second signaux de consigne de fréquence à destination desdits moyens d'asservissement (B2), et
- des moyens de mémoire de séquencement (130), comprenant par exemple une mémoire morte, reliés, d'autre part, auxdits moyens de comptage d'adresse par lesdites lignes de sortie d'adresse et, d'autre part, à des moyens (D1) pour sélectionner un nombre de mesures de temps de vol à effectuer,

lesdits moyens de mémoire de séquencement étant préalablement programmés de sorte qu'ils génèrent séquentiellement des commandes desdits moyens (B) de traitement et de mise en forme et desdits moyens (C) de mesure de déphasage ainsi que des signaux de gestion à destination desdits moyens (M) de contrôle et de traitement.

18. Dispositif conforme à la revendication 17, caractérisé en ce que lesdits moyens d'élaboration (80) génèrent en outre, à partir dudit signal prétraité de référence de fréquence égale à ladite fréquence de mesure, un signal de séquencement de fréquence moitié de celle dudit signal prétraité de référence et en ce que ledit signal de séquencement est appliqué en entrée desdits moyens de comptage d'adresse (140) de sorte que ces derniers sont synchronisés avec le fonctionnement desdits moyens (C) de mesure de déphasage.

19. Dispositif conforme à l'une des revendications 9 à 18, caractérisé en ce que lesdits moyens d'émission (A1) dudit faisceau lumineux initial modulé, lesdits moyens de déviation (A4), lesdits moyens de détection (A2) et lesdits moyens de traitement haute fréquence (A3) sont rassemblés au sein d'une tête de mesure et en ce que ladite tête de mesure est reliée par une liaison blindée auxdits moyens de traitement et de mise en forme (B), auxdits moyens de mesure de déphasage (C) et auxdits moyens d'interface et de séquencement (D).

20. Dispositif conforme à l'une des revendications 14 à 19 et à la revendication 13, caractérisé en ce que lesdits moyens d'élaboration (80) sont realisés en technologie ECL.

**Patentansprüche**

1. Telemetrieverfahren mit Anwendung von Laufzeitmessung zur Bestimmung der Position eines Objekts (2) in einem festgelegten Meß-Bezugssystem, die folgenden Schritte umfassend:

a) Ausstrahlung eines Initial-Lichtstrahls, moduliert entsprechend einem Modulationssignal mit einer zugehörigen Modulationsfrequenz (f), und Erzeugung eines besagtem Strahl entsprechenden Bezugssignals,

b) Ablenkung des genannten Strahls in einem festgelegten, mit dem genannten Bezugssystem verbundenen Punkt, entsprechend einem festgelegten Ablenkungswinkel, in einen Strahl, der einfällt auf einen im wesentlichen punktförmigen Teil der Oberfläche des genannten Objekts,

c) Ablenkung des durch das genannte Objekt reflektierten und/oder rückgestreuten und dem einfallenden Strahl entsprechenden Strahls, gemäß dem festgelegten Ablenkungswinkel, in einen Meßstrahl,

d) Erfassung des genannten Meßstrahls und Erzeugung eines Erfassungssignals mit der genannten Modulationsfrequenz (f) und eines Meßsignals mit einer Meßfrequenz (F), wobei besagtes Meßsignal erhalten wird durch Frequenzumwandlung des Erfassungssignals, von der genannten Modulationsfrequenz (f) in die Meßfrequenz (F),

e) Behandlung und Formung der genannten Bezugs- und Meßsignale, was zu vorbehandelten Bezugs- und Meßsignalen führt, wobei die Modulationsfrequenz auf eine erste festgelegte Regelfrequenz geregelt wird, **dadurch gekennzeichnet,**

daß der genannte Ausstrahlungsschritt a) einen Syntheseschritt a1) eines Zwischensignals einer Frequenz gleich der Summe der genannten Modulations- und Meßfrequenzen aufgrund von ersten und zweiten Signalen mit Frequenzen jeweils gleich den besagten Modulations- und Meßfrequenzen umfaßt, und dadurch, daß das genannte Zwischensignal gemischt wird, einerseits mit besagtem Modulationssignal, während des genannten Ausstrahlungsschritts a), um besagtes Bezugssignal zu erhalten, und andererseits mit dem genannten Erfassungssignal, während dem Erfassungsschritt d), um das genannte Meßsignal zu erhalten, und dadurch, daß der genannte Formungsschritt e) einen Regelungsschritt e1) der Meßfrequenz (F) in eine zweite festgelegte Regelfrequenz umfaßt.

2. Verfahren nach Anspruch 1, dadurch gekennzeichnet, daß der Schritt e) zur Behandlung und Formung außerdem einen Schritt e2) zur Korrektur der Kopplung zwischen dem genannten Bezugssignal und dem genannten Meßsignal umfaßt.

3. Verfahren nach einem der Ansprüche 1 oder 2, dadurch gekennzeichnet, daß der Schritt e) zur Behandlung und Formung außerdem einen Schritt e3) zur selektiven Filtrierung mit der Meßfrequenz (F) und zur Formung von Rechteckimpulsen des genannten Bezugssignals und des genannten Meßsignals umfaßt, was zu den genannten, vorbehandelten Bezugs- und Meßsignalen führt.

4. Verfahren nach Anspruch 3, dadurch gekennzeichnet, daß es außerdem einen Schritt f) zur Messung der Phasenverschiebung zwischen besagten vorbehandelten Bezugs- und Meßsignalen und zur Bestimmung der genannten, entsprechenden Laufzeit umfaßt, und dadurch, daß besagter Schritt f) zur Messung der Phasenverschiebung einen Schritt f1) zur Bildung eines ersten Rampensignals, eines zweiten Rampensignals, eines Zählsignals und eines Dilatationssignals aus den besagten vorbehandelten Bezugsund Meßsignalen und einem Taktsignal mit festgelegter Frequenz (Fo) umfaßt, wobei das Zählsignal und das Dilatationssignal eingerichtet bzw. vorgesehen sind für die Bestimmung der genannten Laufzeit mittels einer Doppelrampen-Interpolations-Dilatations-Methode.

5. Verfahren nach Anspruch 4, dadurch gekennzeichnet, daß der Schritt f) zur Messung der Phasenverschiebung außerdem einen Schritt f2) zur Bildung eines Abfolgesteuerungssignals aus dem genannten vorbehandelten Bezugssignal umfaßt, wobei dieses Abfolgesteuerungssignal eine Frequenz aufweist, die halb so groß ist wie die Frequenz des besagten vorbehandelten Bezugssignals.

6. Verfahren nach einem der Ansprüche 1 bis 5, dadurch gekennzeichnet, daß es außerdem einen Schritt g) zur Bestimmung des Abstands des genannten, im wesentlichen punktförmigen Teils in bezug auf einen in dem Meß-Bezugssystem festgelegten Punkt umfaßt, in Abhängigkeit von der besagten Laufzeit und dem besagten, festgelegten Ablenkungswinkel, und dadurch, daß die Abfolge der Schritte a) bis g) eine festgelegte Anzahl Male durchgeführt wird für einen festgelegten Ablenkungswinkel, und dadurch, daß der Mittelwert der am Ende einer jeden der genannten Abfolgen erhaltenen Laufzeiten berechnet wird, um eine mittlere Laufzeit zu liefern und eine Bestimmung einer mittleren Distanz zwischen dem besagten, im wesentlichen punktförmigen Teil der Oberfläche des genannten Objekts und dem besagten festgelegten Punkt in dem genannten Meß-Bezugssystem.

7. Verfahren nach einem der Ansprüche 5 und 6, dadurch gekennzeichnet, daß jede der besagten Abfolgen synchron zu dem genannten Abfolgesteuerungssignal erfolgt.

8. Telemetriegerät mit Anwendung von Laufzeitmessung zur Bestimmung der Position eines Objekts (2) in einem festgelegten Meß-Bezugssystem und zur Anwendung des Verfahrens nach Anspruch 1, umfassend:
   - Einrichtungen zum Erzeugen eines Modulationssignals mit der Modulationsfrequenz (f),
   - Einrichtungen (A1) zum Ausstrahlen eines modulierten Initiallichtstrahls, als Antwort auf das besagte Modulationssignal,
   - Einrichtungen (A4) zum Ablenken eines Teils des besagten Initialstrahls, entsprechend einem festgelegten Ablenkwinkel, in einen auf einen im wesentlichen punktförmigen Teil der Oberfläche des genannten Objekts (2) einfallenden Strahl, und außerdem einen Strahl, durch besagten punktförmigen Teil und dem einfallenden Stahl entsprechend reflektiert und/oder rückgestreut, gemäß dem besagten Ablenkwinkel, in einen Meßstrahl,
   - Erzeugungseinrichtungen eines Bezugssignals, dem genannten Strahl entsprechend,
   - Einrichtungen (A2) zur Erfassung des genannten Meßstrahls und der Erzeugung eines Erfassungssignals mit der besagten Modulationsfrequenz,

- Erzeugungseinrichtungen eines Meßsignals mit einer Meßfrequenz (F) durch Frequenzumwandlung des Erfassungssignals, von der genannten Modulationsfrequenz (f) in die Meßfrequenz (F),
- Einrichtungen zur Behandlung und Formung besagter Bezugs- und Meßsignale, zu vorbehandelten Bezugs- und Meßsignalen führend, und Regelungseinrichtungen, die vorgesehen sind, um die Modulationsfrequenz (f) auf eine erste festgelegte Regelfrequenz zu regeln,

   **dadurch gekennzeichnet,** daß es umfaßt:

- Einrichtungen zur Synthese eines Zwischensignals der Frequenz (F+f) gleich der Summe der genannten Modulations- und Meßfrequenzen (f, F) aus dem ersten und zweiten Signal mit Frequenzen jeweils gleich besagten Modulations- und Meßfrequenzen,
- Mischeinrichtungen (24) des besagten Zwischensignals mit dem Modulationssignal, um das genannte Bezugssignal zu erhalten,
- Mischeinrichtungen (28) des besagten Zwischensignals mit dem Erfassungssignal, um das genannte Meßsignal zu erhalten,
- Regelungseinrichtungen der besagten Meßfrequenz (F) auf eine zweite festgelegte Regelungsfrequenz.

9. Gerät nach Anspruch 8, dadurch gekennzeichnet, daß die Erzeugungseinrichtungen des Modulationssignals und die Erzeugungseinrichtungen der elektrischen Bezugs- und Meßsignale miteinander gekoppelt sind und Hochfrequenz-Behandlungsvorrichtungen (A3) bilden, und dadurch, daß die Einrichtungen zur Behandlung und Formung (B) an besagte Hochfrequenz-Behandlungseinrichtungen ein erstes Steuersignal liefern mit einer ersten Steuerfrequenz, die festgelegt ist und aufgeht in der genannten Modulationsfrequenz, und ein zweites Steuersignals mit einer zweiten Steuerfrequenz, festgelegt und aufgehend in der genannten Modulationsfrequenz.

10. Gerät nach Anspruch 9, dadurch gekennzeichnet, daß die Einrichtungen (B) zur Behandlung und Formung Einrichtungen (B2) umfassen, zur Frequenzregelung des besagten ersten beziehungsweise zweiten Steuersignals bezüglich der ersten und zweiten Sollfrequenz des ersten und zweiten Frequenzsollwertsignals, geliefert durch die genannten Interface-und Abfolgesteuerungseinrichtungen (D).

11. Gerät nach einem der Ansprüche 8 bis 10, dadurch gekennzeichnet, daß die Einrichtungen (B) zur Behandlung und Formung außerdem Kopplungskorrektureinrichtungen (58, 59, 64, 65) zwischen einem ersten, besagtes elektrisches Bezugssignal leitenden Eingangskanal und einem zweiten, besagtes elektrisches Meßsignal leitenden Kanal umfaßt.

12. Gerät nach Anspruch 11, dadurch gekennzeichnet, daß die Einrichtungen (B) zur Behandlung und Formung außerdem erste und zweite Selektivfiltereinrichtungen umfassen, zentriert auf die genannte Meßfrequenz, jeweils verbunden mit dem ersten und zweiten Eingangskanal, flußabwärts von den genannten Kopplungskorrektureinrichtungen, und erste und zweite Rechteckimpuls-Formungseinrichtungen, jeweils verbunden mit besagten Selektivfiltereinrichtungen und die genannten vorbehandelten Bezugs- und Meßsignale liefernd.

13. Gerät nach einem der Ansprüche 10 bis 12, dadurch gekennzeichnet, daß die genannten Phasenverschiebungs-Meßeinrichtungen (C) Einrichtungen (80) umfassen, um aus besagten Bezugs- und Meßsignalen und aus einem Taktsignal mit festgelegter Frequenz, ausgegeben von den Interface- und Abfolgesteuerungs einrichtungen (D), ein erstes Rampensignal, ein zweites Rampensignal, ein Zählsignal und ein Dilatationssignal zu bilden, wobei das erste und das zweite Rampensignal, das Zählsignal und das Dilatationsignal geschaltet sind, um Integrationseinrichtungen (C2) zur Bestimmung der besagten Laufzeit durch eine Interpolations-Dilatations-Methode zu implementieren.

14. Gerät nach Anspruch 13, dadurch gekennzeichnet, daß die Intetrationseinrichtungen (C2) umfassen:
   - einen Integrationskondensator (90),
   - eine erste Stromquelle (81) mit festgelegter Stärke,
   - eine zweite Stromquelle (88) mit einer Stärke gleich der Stärke der ersten Stromquelle,
   - eine dritte Stormquelle (89) mit einer Stärke gleich einem festgelegten Bruchteil der Stärke der ersten und der zweiten Quelle,
   - erste, zweite und dritte Schalteinrichtungen (83, 88, 89), jeweils gesteuert durch die genannten Signale, nämlich das erste Rampensignal und das zweite Rampensignal und das Dilatationssignal, um die genannten Stromquellen, die erste, die zweite und die dritte, jeweils selektiv mit dem genannten Integrationskondensator zu verbinden,

15

so daß der besagte Kondensator selektiv jeweils einen ersten Strom festgelegter Stärke, einen zweiten Strom derselben Stärke mit umgekehrtem Vorzeichen und einen dritten Strom der Stärke gleich einem festgelegten Bruchteil der Stärke des ersten Stroms und mit umgekehrtem Vorzeichen in bezug auf diesen absorbiert, und

- Einrichtungen (85) zum Erkennen der Nullspannung an den Klemmen des Integrationskondensators (90) und zum Aussenden eines Dilatations-Endsignals.

15. Gerät nach einem der Ansprüche 13 oder 14, dadurch gekennzeichnet, daß die genannten Einrichtungen (C) zur Messung der Phasenverschiebung außerdem umfassen:

- Zähleinrichtungen (94, 96), verbunden mit den Bildungseinrichtungen (80) und den Integrationseinrichtungen (C2), um einerseits die Anzahl Perioden des genannten Taktsignals zu zählen, die der Dauer des besagten Zählsignals entspricht, und andererseits die Anzahl Taktsignalperioden, die der Dauer der Dilatationsphase entspricht, während der der Integrationskondensator gespeist wird durch die genannte dritte Stromquelle.

16. Gerät nach Anspruch 15, dadurch gekennzeichnet, daß die Einrichtungen (C) zur Messung der Phasenverschiebung außerdem umfassen: Einrichtungen (97), um von den Zähleinrichtungen (94, 96) ausgegebene digitale Zähldaten selektiv zu verschieben, so daß ein Mittelwert aus mehreren durch besagtes Gerät durchgeführten Laufzeitmessungen am Ausgang der Verschiebungseinrichtungen (97) erscheint.

17. Gerät nach einem der Ansprüche 10 bis 16, dadurch gekennzeichnet, daß die Interface- und Abfolgesteuerungseinrichtungen (D) umfassen:

- Zeitgebereinrichtungen (120) zum Erzeugen eines Taktsignals mit festgelegter Frequenz,
- Adreßzähleinrichtungen (140), verbunden mit den Zeitgebereinrichtungen, um einerseits eine binäre Adreßkombination aus einer festgelegten Anzahl Adreßausgangsleitungen zu erzeugen, und andererseits die genannten ersten und zweiten Frequenzsollwertsignale, bestimmt für die Regelungseinrichtungen (B2), und
- Abfolgesteuerungs-Speichereinrichtungen (130), z.B. einen Festspeicher umfassend, einerseits verbunden mit den Adreßzähleinrichtungen durch die genannten Adreßausgangsleitungen, und andererseits mit Einrichtungen (D) zum Wählen einer Anzahl auszuführender Laufzeitmessungen, wobei die genannten Abfolgesteuerungs-Speichereinrichtungen vorhergehend derart programmiert werden, daß sie sequentiell Befehle der Einrichtungen (B) zur Behandlung und Formung und der Einrichtungen (C) zum Messen der Phasenverschiebung sowie Verwaltungssignale für die Kontroll- und Behandlungseinrichtungen (M) erzeugen.

18. Gerät nach Anspruch 17, dadurch gekennzeichnet, daß die Bildungseinrichtungen (80) außerdem aus dem genannten vorbehandelten Bezugssignal derselben Frequenz wie die genannte Meßfrequenz ein Abfolgesteuerungssignal mit der halben Frequenz bezüglich der des vorbehandelten Bezugssignals erzeugen, und dadurch, daß besagtes Abfolgesteuerungssignal an den Eingang der Adreßzähleinrichtungen (140) gelegt wird, so daß diese letzteren synchronisiert sind mit dem Betrieb der Phasenverschiebungsmeßeinrichtungen (C).

19. Gerät nach einem der Ansprüche 9 bis 18, dadurch gekennzeichnet, daß die Ausstrahlungseinrichtungen (A1) des genannten modulierten Initiallichtstrahls, die Ablenkeinrichtungen (A4), die Erfassungseinrichtungen (A2) und die Hochfrequenz-Behandlungseinrichtungen (A3) zusammengefaßt sind in einem Meßkopf, und dadurch, daß besagter Meßkopf über eine abgeschirmte Verbindung mit den genannten Behandlungs- und Formgebungseinrichtungen (B), den Phasenverschiebungseinrichtungen (C) und den Interface- und Abfolgesteuerungseinrichtungen (D) verbunden ist.

20. Gerät nach einem der Ansprüche 14 bis 19 und nach dem Anspruch 13, dadurch gekennzeichnet, daß die genannten Bildungseinrichtungen (80) in ECL-Technik hergestellt sind.

**Claims**

1. Method of rangefinding by measuring time of flight in order to determine the position of an object (2) in a predetermined measurement reference system, comprising the following sequence of steps:

(a) emission of an initial light beam, modulated by a modulation signal with an associated modulation frequency (f), and for generation of a reference signal corresponding to the said beam,

(b) deflection of the said beam into a predetermined point related to the said reference system, through a predetermined deflection angle, into a beam incident on a substantially point-like part of the surface of the said object,

(c) deflection of the beam reflected and/or backscattered by the said object and corresponding to the said incident beam, through the said predetermined deflection angle, into a measurement beam,

(d) detection of the said beam for measurement and for generation of a detection signal at the said modulation frequency (f), and of a measurement signal at a measurement frequency (F), the said measurement signal being obtained by frequency-changing of the detection signal, from the said modulation frequency (f) to the measurement frequency (F),

(e) processing and shaping of the said reference and measurement signals leading to preprocessed reference and measurement signals, the modulation frequency being slaved to a first predetermined slaving frequency, characterized in that the said emission step a) comprises a step of synthesis a1) of an intermediate signal with frequency equal to the sum of the said modulation and measurement frequencies from first and second signals with frequencies respectively equal to the said modulation and measurement frequencies, and in that the said intermediate signal is mixed, on the one hand, with the said modulation signal during the said emission step a), in order to obtain the said reference signal and, on the other hand, with the said detection signal during the said detection step d) in order to obtain the said measurement signal, and in that the said processing and shaping step e) comprises a step e1) of slaving of the said measurement frequency (F) to a second predetermined slaving frequency.

2. Method according to Claim 1, characterized in that the said processing and shaping step e) further comprises a step e2) of correction of coupling between the said reference signal and the said measurement signal.

3. Method according to one of Claims 1 or 2, characterized in that the said processing and shaping step e) further comprises a step e3) of selective filtering at the said measurement frequency (F) and of shaping of square-waves of the said reference signal and of the said measurement signal, leading to the said preprocessed reference and measurement signals.

4. Method according to Claim 3, characterized in that it further comprises a step f) of measuring phase shift between the said preprocessed reference and measurement signals and of determining the said corresponding time of flight, and in that the said step f) of measuring phase shift includes a step f1) of deriving a first ramp signal, a second ramp signal, a counting signal and a stretching signal from the said preprocessed reference and measurement signals, and a clock signal with a predetermined frequency (Fo), the said first and second ramp signals, the said counting signal and the said stretching signal being arranged for determining the said time of flight by a double-ramp interpolation/ stretching method.

5. Method according to Claim 4, characterized in that the said step f) of measuring phase shift further comprises a step $f_2$) of deriving a sequencing signal from the said preprocessed reference signal, the said sequencing signal having a frequency half the frequency of the said preprocessed reference signal.

6. Method according to Claims 1 to 5, characterized in that it further comprises a step g) of determining the distance of the said substantially point-like part with respect to a predetermined point in the said measurement reference system as a function of the said time of flight and of the said predetermined deflection angle, and in that the said sequence of the steps a) to g) is performed a predetermined number of times for a predetermined deflection angle, and in that the said times of flight obtained on completion of each of the said sequences are averaged in order to supply an average time of flight and a determination of an average distance between the said substantially point-like part of the surface of the said object and the said predetermined point in the said measurement reference system.

7. Method according to Claims 5 and 6, characterized in that each of the said sequences is carried out in synchronism with the said sequencing signal.

8. Device for rangefinding by measuring time of flight in order to determine the position of an object (2) in a predetermined measurement reference system, and implementing the method according to Claim 1, comprising:
   - means of generating a modulation signal at a modulation frequency (f),
   - means (A1) of emitting an initial modulated light beam, in response to the said modulation signal,
   - means (A4) of diverting, on the one hand, the said initial beam, through a predetermined diversion angle, into a beam incident on a substantially point-like part of the surface of the said object (2) and on the other hand a beam reflected and/or backscattered by the said substantially point-like part and corresponding to the said incident beam, through the said diversion angle into a measurement beam,

- means of generating a reference signal corresponding to the said beam,
- means (A2) of detecting the said beam for measurement and for generation of a detection signal at the said modulation frequency,
- means of generating a measurement signal at a measurement frequency (F) by frequency-changing of the detection signal, from the said modulation frequency (f) to the measurement frequency (F),
- means of processing and shaping the said reference and measurement signals leading to preprocessed reference and measurement signals, slaving means being provided for slaving the modulation frequency (f) to a first predetermined slaving frequency, characterized in that it comprises:
- means of synthesizing an intermediate signal with frequency (F+f) equal to the sum of the said modulation (f) and measurement (F) frequencies from first and second signals with frequencies respectively equal to the said modulation and measurement frequencies,
- means (24) of mixing the said intermediate signal with the said modulation signal in order to obtain the said reference signal,
- means (28) of mixing the said intermediate signal with the said detection signal in order to obtain the said measurement signal,
- means of slaving the said measurement frequency (F) to a second predetermined slaving frequency.

9. Device according to Claim 8, characterized in that the said means of generating the said modulation signal and the said means of generating the said electrical reference and measurement signals are coupled together and constitute high-frequency processing means (A3), and in that the said processing and shaping means (B) deliver, to the said high-frequency processing means (A3) a first control signal at a first control frequency, a predetermined sub-multiple of the said modulation frequency, and a second control signal at a second control frequency, a predetermined sub-multiple of the said modulation frequency.

10. Device according to Claim 9, characterized in that the said processing and shaping means (B) comprise means (B2) for frequency-slaving of the said first and second control signals respectively with respect to first and second datum frequencies of first and second frequency datum signals delivered by the said interface and sequencing means (D).

11. Device according to one of Claims 8 to 10, characterized in that the said processing and shaping means (B) further comprise means of coupling correction (58, 59, 64, 65) between a first input channel conveying the said reference electrical signal, and a second input channel conveying the said measurement electrical signal.

12. Device according to Claim 11, characterized in that the said processing and shaping means (B) further comprise first and second selective filtering means, centred on the said measurement frequency, linked respectively to the first and second input channels downstream of the said coupling correction means, and first and second means of square-wave shaping, which are linked respectively to the said first and second selective filtering means and delivering the said preprocessed reference and measurement signals.

13. Device according to one of Claims 10 to 12, characterized in that the said phase-shift measurement means (C) comprise means (80) of deriving, from the said reference and measurement signals and from a clock signal with predetermined frequency output by the said interface and sequencing means (D), a first ramp signal, a second ramp signal, a counting signal and a stretching signal, the said first and second ramp signals, the said counting signal and the said stretching signal being arranged to operate integration means (C2) for determining the said time of flight by a double-ramp interpolation/stretching method.

14. Device according to Claim 13, characterized in that the said integration means (C2) comprise:
   - an integration capacitor (90),
   - a first source of current (81) of predetermined strength,
   - a second source of current (88) of strength equal to that of the said first source,
   - a third source of current (89) of strength equal to a predetermined fraction of that of the said first and second sources,
   - first, second and third switching means (83, 88, 89), controlled respectively by the said first ramp signal, and second ramp signal and the said stretching signal, in order selectively to link the said first, second and third current sources respectively to the said integration capacitor, so that the said capacitor selectively absorbs a first current of predetermined strength, a second current of the same strength and of opposite sign and a third current of strength equal to a predetermined fraction of the said strength and of sign opposite to the said first current respectively, and

- means (85) of detecting the cancellation of the voltage at the terminals of the said integration capacitor (90) and sending an end-of-stretching signal.

15. Device according to one of Claims 13 or 14, characterized in that the said phase-shift measurement means further comprise:

- counting means (94, 96), linked to the said derivation means (80) and to the said integration means (C2) in order to count, on the one hand, the number of periods of the said clock signal corresponding to the duration of the said counting signal, and on the other hand, the number of periods of the said clock signal corresponding to the duration of the stretching phase during which the said integration capacitor is fed by the said third current source.

16. Device according to Claim 15, characterized in that the said phase-shift measurement means (C) further comprise: means (97) of selectively shifting digital counting data output by the said counting means (94, 96) so that an average value of several measurements of time of flight performed by the said device appears at the output of the said shift means (97).

17. Device according to one of Claims 10 to 16, characterized in that the said interface and sequencing means (D) comprise:

- clock means (120) for generating a clock signal with predetermined frequency,
- address counting means (140), linked to the said clock means, in order to generate, on the one hand, a binary address combination on a predetermined number of address output lines and, on the other hand, the said first and second frequency datum signals intended for the said slaving means (B2), and
- sequencing memory means (130), comprising, for example, a read-only memory, linked, on the other hand, to the said address counting means by the said address output lines and, on the other hand, to means (D1) for selecting a number of measurements of time of flight to be performed, the said sequencing memory means being programmed in advance in such a way that they sequentially generate orders to the said processing and shaping means (B) and the said phase-shift measurement means (C) as well as management signals intended for the said checking and processing means (M).

18. Device according to Claim 17, characterized in that the said derivation means (80) further generate, from the said preprocessed signal with reference frequency equal to the said measurement frequency, a sequencing signal with frequency half that of the said preprocessed reference signal and in that the said sequencing signal is applied at the input of the said address counting means (140) so that the latter are synchronized with the operation of the said phase-shift measuring means (C).

19. Device according to one of Claims 9 to 18, characterized in that the said means (A1) of emitting the said initial modulated light beam, the said diversion means (A4), the said detection means (A2) and the said high-frequency processing means (A3) are assembled together within a measurement head and in that the said measurement head is linked by a shielded link to the said processing and shaping means (B), to the said phase-shift measurement means (C) and to the said interface and sequencing means (D).

20. Device according to one of Claims 14 to 19 and to Claim 13, characterized in that the said derivation means (80) are produced in ECL technology.

FIG_1

FIG_2

EP 0 395 508 B1

FIG.3

# FIG.4

# FIG.5

EP 0 395 508 B1

FIG.6